# FASCICULE DE BREVET EUROPEEN

(11) **EP 2 223 215 B1**
(45) Date de publication et mention de la délivrance du brevet: **03.01.2018**
(21) Numéro de dépôt: 08856299.6
(22) Date de dépôt: 07.11.2008
(51) Int. Cl.: G06F 9/50, G06F 9/48, H04L 29/08

(54) **PROCÉDÉ DE CONTRÔLE D'AU MOINS UN PROCESSUS APPLICATIF ET PRODUIT PROGRAMME D'ORDINATEUR CORRESPONDANT**
VERFAHREN ZUM STEUERN MINDESTENS EINES ANWENDUNGSPROZESSES UND ENTSPRECHENDES COMPUTERPROGRAMMPRODUKT
METHOD FOR CONTROLLING AT LEAST ONE APPLICATION PROCESS AND CORRESPONDING COMPUTER PROGRAM PRODUCT

(30) Priorité: 16.11.2007 FR 0759121
(43) Date de publication de la demande: 01.09.2010
(73) Titulaire: Orange, 75015 Paris (FR)
(72) Inventeur: BREGANT-BELIN, Pierre, F-14700 Versainville (FR)
(74) Mandataire: Vidon Brevets & Stratégie
(86) Numéro de dépôt international: PCT/FR2008/052017
(87) Numéro de publication internationale: WO 2009/071778

(56) Documents cités:
- US-A1- 2004 143 645
- M. JURIC: "A Hands-on Introduction to BPEL" ORACLE WHITE PAPER, [Online] 2005, pages 1-12, XP002490390 Extrait de l'Internet: URL:http://www.oracle.com/technology/pub/a rticles/matjaz_bpel1.html A Hands-on Introduction to BPEL> [extrait le 2008-07-28]
- M. JURIC: "Resources for Java server-side developers" UNIVERSITY OF MARIBOR, [Online] pages 1-3, XP002490391 Extrait de l'Internet: URL:http://lisa.uni-mb.si/~juric/paperss.h tm Matjaz B. Juric - Papers> [extrait le 2008-07-28]
- BRAMBILLA M ET AL: "Managing asynchronous web services interactions" WEB SERVICES, 2004. PROCEEDINGS. IEEE INTERNATIONAL CONFERENCE ON SAN DIEGO, CA, USA 6-9 JULY 2004, PISCATAWAY, NJ, USA,IEEE, 6 juillet 2004 (2004-07-06), pages 80-87, XP010709408 ISBN: 978-0-7695-2167-1
- E. CHINTHAKA: "Develop asynchronous Web services with Axis2" DEVELOPERWORKS, [Online] 11 octobre 2007 (2007-10-11), pages 1-6, XP002490392 IBM Extrait de l'Internet: URL:http://www.ibm.com/developerworks/webs ervices/library/ws-axis2/ Develop asynchronous Web services with Axis2> [extrait le 2008-07-28]
- GIANCARLO TRETOLA ET AL: "Client-Side Implementation of Dynamic Asynchronous Invocations for Web Services" PARALLEL AND DISTRIBUTED PROCESSING SYMPOSIUM, 2007. IPDPS 2007. IEEE INTERNATIONAL, IEEE, PI, 1 mars 2007 (2007-03-01), pages 1-8, XP031175467 ISBN: 978-1-4244-0909-9

## Description

La présente invention se rapporte au domaine des technologies visant le contrôle de services applicatifs, par exemple de Services Web accessibles au moyen d'un terminal connecté à un réseau de communication.

La présente invention se rapporte plus particulièrement à la mise en oeuvre de services. Une telle mise en oeuvre peut être appliquée dans le cadre d'une architecture de services dite « n-tiers », à savoir qu'elle fait intervenir plusieurs composants logiciels. Un composant logiciel, encore appelé communément composant applicatif, peut mettre en oeuvre ou exécuter une combinaison de plusieurs services (Services Web, par exemple) à rendre à un client qui en fait la demande.

Le terme « client », doit être compris ici et dans la suite de l'exposé comme désignant une entité qui sollicite directement ou indirectement les ressources d'une autre entité pour exécuter une tâche, un client pouvant être matérialisé par un serveur autonome, par un groupe de serveurs, par une application (telle qu'un navigateur Internet) ou par divers éléments séparément répartis au sein de divers moyens de communication inclus dans le système.

Le terme service doit se comprendre comme étant l'expression de la mise en oeuvre d'une ou plusieurs fonctionnalités, selon un enchaînement métier déterminé et permettant d'obtenir un résultat également déterminé, un tel résultat pouvant servir de donnée d'entrée pour un autre service. En effet, un service peut mettre en oeuvre d'autres services (par exemple des Services Web également appelés en anglais « Web Services »). Un service peut être décrit à l'aide d'un langage particulier, tel que le langage BPEL (de l'anglais « Business Process Execution Language » ou « langage d'exécution de processus métiers » en français) pour permettre son orchestration.

Le langage BPEL est un standard basé sur le langage XML (de l'anglais « Extensible Markup Langage ») qui permet de décrire des processus métiers (qui sont également appelés par la suite processus applicatifs) mettant en oeuvre des interactions de Services Web (« Web Services » en anglais), conformes aux attentes du Web 2.0, notamment en terme de dynamisme.

Le langage BPEL permet notamment de mettre en oeuvre des processus métier complexes, selon un mode « Synchrone » : un processus BPEL appellera donc des Services Web par le biais de requêtes et attendra des réponses avant de poursuivre l'exécution de ses autres tâches (appel d'autres Services Web). Un processus BPEL est également perçu, par les clients qui souhaitent l'invoquer, comme un Service Web Synchrone en tant que tel.

Un inconvénient de cette mise en oeuvre synchrone est lié au temps d'exécution (souvent long) d'un processus applicatif BPEL.

En effet, un tel processus qui met en oeuvre de nombreux Services Web de façon synchrone voire asynchrone, de manière séquentielle ou combinée, est souvent long à exécuter et peut provoquer un dépassement d'un délai d'attente (ou « timeout » en anglais) chez l'appelant, c'est-à-dire chez le client qui a sollicité l'exécution d'un processus métier applicatif (du type processus BPEL) constitué d'un ensemble cohérent de Services Web.

Un « timeout » s'apparente à un arrêt inopiné du client lorsqu'un temps de réponse à une requête a dépassé un certain délai. Un exemple connu et courant de «timeout» survient lorsqu'un utilisateur essaie d'accéder à une page web qui existe et dont le chargement provoque un délai d'attente trop long (pour cause de données trop volumineuses) pour le service à l'origine de l'invocation du chargement. Le serveur Web renvoie alors un timeout. Un processus applicatif BPEL global, de part l'enchaînement de plusieurs Services Web de manière synchrone voire asynchrone est susceptible de provoquer un tel « timeout » chez le client, puisque celui-ci ne reçoit pas de réponse à sa requête immédiatement ou dans un temps raisonnable.

Pour pallier cet inconvénient, des extensions ont été ajoutées à BPEL afin d'assurer la gestion d'appels asynchrones (tant pour les Services Web invoqués par le processus BPEL que le processus BPEL lui-même vis-à-vis d'un client qui l'invoque). Une telle mise ne oeuvre asynchrone peut être réalisée en faisant intervenir d'autres standards émergents tels, notamment, que « WS-Adressing » (de l'anglais pour « Adressage de Services Web »), utilisé conjointement avec « SOAP » (de l'anglais «Service Oriented Architecture Protocol» pour « Protocole d'Architecture Orientée Services »). Le principe d'appel asynchrone utilisant « WS-Adressing » est basé sur la mise en oeuvre, au sein de l'appelant et de l'appelé, d'un client et d'un serveur. Par exemple :
- Soient « A » et « B » deux entités. « A » souhaite mettre en oeuvre un processus asynchrone proposé par « B ». Pour ce faire, « A » comprend un client « WC_{A} » qui va appeler le processus de « B », et un serveur de « WS_{A} » qui recevra ultérieurement le résultat en provenance de « B », lorsque le service aura été réalisé. Ce client « WC_{A} » et ce serveur « WS_{A} » devront partager certaines données permettant de relier chez « A » l'appel et le retour de la réponse ;
- le client « WC_{A} » de l'entité « A » appelle le serveur « WS_{B} » asynchrone de l'entité « B » (processus) en lui passant un « endpoint » (URI - de l'anglais « Uniform Ressource Identifier») du « WSA » de retour et un identifiant unique d'instance ;
- une fois que le processus BPEL de « B » a réalisé les actions requises, il renvoie la réponse à l'entité « A » en appelant le serveur « WS_{A} » de « A » (« endpoint » passé précédemment par «A») à l'aide de son client « WC_{B} » de l'entité « B » et en précisant l'identifiant unique d'instance (passé précédemment par « A »).

Une « URI » est une chaîne de caractères identifiant une ressource Web physique ou abstraite.

Un inconvénient de cette technique d'appel asynchrone, est lié à la lourdeur des mécanismes à mettre en oeuvre. En effet, dans notre exemple précédent, « A » doit mettre en oeuvre à la fois un client « WC_{A} » et un serveur « WS_{A} », et doit par ailleurs implémenter, tant sur ce client et ce serveur non seulement le protocole SOAP, mais également d'autres standards (« WS-Adressing » en particulier) qui ne sont pas forcément intégrés à tous les outils de développement actuels et sont donc longs et complexes à implémenter. On perd donc un des bénéfices du langage BPEL qui est justement de créer et de mettre en oeuvre des processus métier simplement et rapidement.

Un autre inconvénient de cette technique d'appel asynchrone est qu'elle n'est pas compatible avec un mode de réalisation dans lequel le client est un navigateur Web (ou un terminal léger) dialoguant avec une application Web. En effet, si l'on trouve un navigateur Web sur tout poste client, on ne trouve que plus rarement un serveur d'application, de sorte que la solution d'appel asynchrone précédemment décrite ne peut être mise en oeuvre pour pallier l'obtention d'un « timeout » du côté du client lorsque celui-ci est un navigateur Web.

Le document "A Hands-on Introduction to BPEL" by M. Juric, Oracle White Paper, Developer:J2EE & Web Services, 2005, pages 1-12, XP002490390 décrit diverses étapes d'un processus BPEL asynchrone et plus particulièrement l'envoi de notifications intermédiaires lors de l'exécution de services Web. Il ne propose pas de modifier le déroulement du dit processus applicatif.

Le document "Managing asynchronous web services interactions" by M. Brambilla, Proceedings of the IEEE International Conference on Web Services (ICWS'04), 6 July 2004-07-06, pages 80-87, XP010709408 décrit l'invocation d'un service Web avec l'envoi par le serveur d'un message initial synchrone de réception dudit service. Le contenu du message se borne à la vérification de l'acceptation d'exécution dudit service par le serveur d'applications. La solution selon l'invention propose un procédé de contrôle d'au moins un processus applicatif qui ne présente pas ces inconvénients.

Selon l'invention, un processus applicatif au sens de l'invention étant constitué d'une pluralité de services applicatifs, ledit procédé comprend avantageusement :
- une étape de réception d'une requête d'activation dudit au moins un processus applicatif ;
- une première étape de transmission d'au moins une information représentative d'un début d'activation dudit processus applicatif, dite information d'activation ;
- des étapes d'exécution de chacun desdits services applicatifs ;
- des étapes de transmission d'une information représentative d'une fin d'exécution de chacun desdits services applicatifs ;
- une dernière étape de transmission d'au moins une information représentative d'une fin d'activation dudit processus applicatif, ladite étape tenant compte de chacune desdites informations représentatives d'une fin d'exécution de chacun desdits services applicatifs.

Ainsi, l'invention repose sur une approche tout à fait nouvelle et inventive permettant d'orchestrer, c'est-à-dire de parfaitement contrôler, d'une façon parfaitement cohérente, l'exécution séquentielle ou combinée de services applicatifs (type Services Web, par exemple) constitutifs d'un processus applicatif, par exemple de type BPEL.

L'invention permet en effet la fourniture d'une information d'activation du processus applicatif, ce qui permet de renseigner un appelant (c'est-à-dire une entité qui est à l'origine de la requête d'activation) sur le démarrage du processus applicatif et sur la fin d'exécution du processus applicatif et avant qu'il ne soit possible d'activer une seconde fois ledit processus applicatif.

Ainsi, l'invention permet d'éviter l'occurrence de "timeouts", l'invention permettant alors de se prémunir contre des arrêts inopinés et intempestifs d'un processus applicatif, pour simple cause de dépassement de délais d'attente.

De plus, la transmission, pour chacun des services applicatifs, d'une information représentative d'une fin de leur exécution respective, permet d'obtenir une indication quant au comportement global du processus applicatif. En effet, ces informations représentatives de la fin d'exécution d'un service applicatif permettent d'indiquer par exemple la survenance d'une erreur. Ainsi, ces informations peuvent servir soit à modifier, dynamiquement, le comportement du processus métier en fonction des erreurs, soit à réaliser des diagnostics d'erreurs. De plus, ces informations de fins d'exécution peuvent également être utilisées pour faciliter le développement en offrant la possibilité au développeur de pouvoir contrôler le bon enchaînement de l'exécution de chacun des services impliqués dans un processus applicatif.

Selon une caractéristique particulière de l'invention, le dit procédé comprend, préalablement à ladite première étape de transmission, une étape d'exécution d'un service synchrone délivrant ladite au moins une information d'activation.

Ainsi, l'exécution d'un service applicatif synchrone permet d'obtenir immédiatement l'information de début d'activation, ce qui permet à un client d'éviter un dépassement du délai d'attente après qu'il ait sollicité l'exécution d'un processus applicatif métier.

Selon un mode de réalisation particulier de l'invention, ledit au moins un processus applicatif est du type BPEL.

Ainsi, l'invention permet une activation de processus BPEL à partir d'une application client telle qu'un navigateur Internet. L'invention permet donc d'éviter une mise en oeuvre de mécanismes basés sur des standards tels que « WS-Adressing ». L'invention permet l'invocation d'un premier service synchrone préalablement à la mise en oeuvre des autres services applicatifs. Ainsi, un client qui souhaite mettre en oeuvre un processus applicatif long, globalement asynchrone reçoit une réponse immédiate, de la part d'un premier service synchrone. Cette réponse est envoyée au client. Il s'ensuit une ou plusieurs exécutions de services applicatifs qui ne provoquent pas d'anomalies vis-à-vis du client. En effet ce dernier a déjà obtenu, de la part du service synchrone, une réponse à sa requête.

L'invention permet donc par exemple d'utiliser un moteur d'orchestration BPEL en combinaison à un navigateur Internet, et d'autoriser ainsi des orchestrations longues, globalement asynchrones tout en n'utilisant que des appels synchrones côté client (navigateur Internet), ce qui n'est pas possible avec les mécanismes de l'art antérieur.

Selon une caractéristique avantageuse de l'invention, à l'issue de ladite étape d'exécution d'un service synchrone, on exécute une étape d'insertion de ladite information d'activation dans une base de données si une telle information d'activation n'y a pas déjà été insérée relativement audit processus applicatif, de façon à fournir un indicateur selon lequel ledit processus applicatif est en cours d'exécution et ne peut être activé une nouvelle fois avant la fin de son exécution en cours.

Ainsi, l'invention permet d'indiquer, de manière centralisée, au sein d'une base de données, qu'une mise en oeuvre du processus est déjà en cours.

De plus, l'invention permet d'indiquer à un client qui souhaite lancer l'exécution du processus que ce dernier ne peut pas être exécuté car une autre mise en oeuvre ou exécution de ce même processus applicatif est déjà en cours.

L'invention concerne également un dispositif de contrôle d'au moins un processus applicatif comprenant une pluralité de services applicatifs.

Selon l'invention, un tel dispositif comprend :
- des moyens de réception d'une requête d'activation dudit au moins un processus applicatif ;
- des moyens de transmission d'au moins une information représentative d'un début d'activation dudit processus applicatif, dite information d'activation ;
- des moyens d'exécution de chacun desdits services applicatifs ;
- des moyens de transmission d'une information représentative d'une fin d'exécution de chacun desdits services applicatifs ;
- des moyens de transmission d'au moins une information représentative d'une fin d'activation dudit processus applicatif, ladite étape tenant compte desdites informations représentatives d'une fin d'exécution de chacun desdits services applicatifs.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de contrôle tel que décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une architecture informatique dans laquelle le procédé de l'invention est mis en oeuvre ;
- la figure 2 illustre les étapes de mise en oeuvre du procédé de l'invention dans le cadre de l'architecture de la figure 1 ;
- la figure 3 décrit le déroulement de la mise en oeuvre d'un service dans un mode de réalisation particulier de l'invention ;
- la figure 4 détaille l'enchaînement des actions de la figure 3 ;
- la figure 5 présente une vue schématique d'un dispositif de mise en oeuvre du procédé selon l'invention.

L'invention permet donc la mise en oeuvre simplifiée d'un ensemble de services applicatifs, globalement asynchrones, constitutifs d'un processus applicatif, sans qu'il soit nécessaire d'implémenter des architectures informatiques complexes et coûteuses au sein du client qui souhaite que ce processus applicatif soit mis en oeuvre.

Le principe général de l'invention repose sur la fourniture, de façon synchrone (c'est-à-dire que l'émission d'une requête d'invocation du processus applicatif provoque l'envoi d'une réponse dans un délai court, c'est-à-dire dans un délai inférieur au délai du timeout).

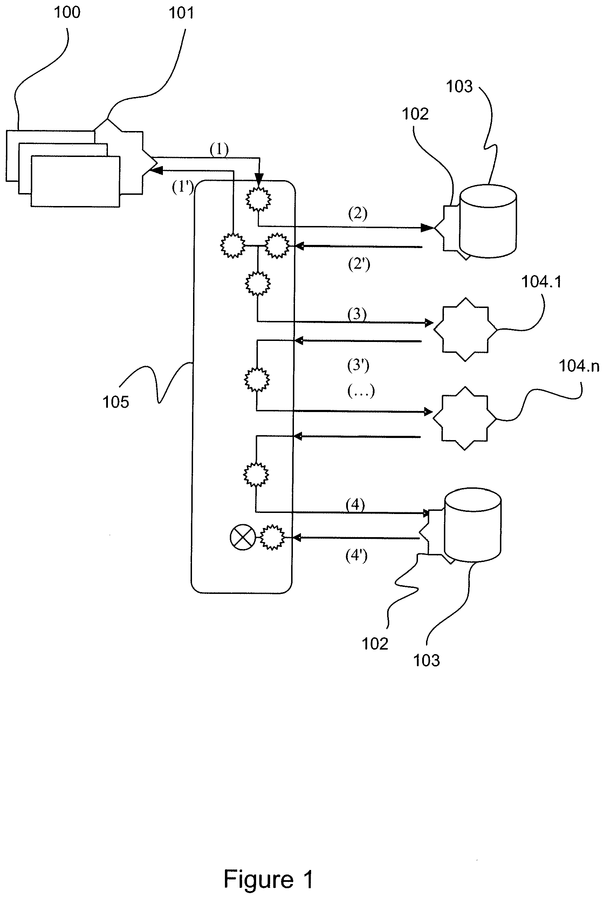

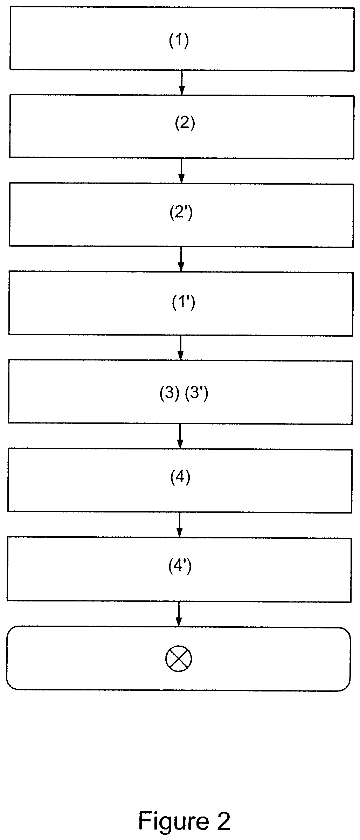

Pour ce faire le procédé de l'invention met en oeuvre les étapes suivantes, présentées en relation avec les figures 1 et 2.

Un client 100, émet (1), par le biais d'une interface 101, une requête de d'invocation d'un processus applicatif (ayant pour objet la mise en oeuvre d'au moins un service applicatif). Cette requête est reçue par un système d'exécution de processus 105.

Le système d'exécution de processus 105 lance l'exécution (2) d'un service synchrone 102.

Ce service synchrone 102 fourni (2' puis 1', par l'intermédiaire du système 105) au client 100 une information relative à un début d'activation du processus applicatif. L'information de début d'activation peut éventuellement être sauvegardée et maintenue pour un usage ultérieur dans une base de données 103.

Le système 105 exécute (3, 3') les services applicatifs (104.1 à 104.n) qui composent le processus applicatif. A la fin de l'exécution du processus applicatif, une information relative à la fin de mise en oeuvre du processus applicatif est fournie (4) au service synchrone 102, puis au système 105 (4') et par la suite retransmise au client 100.

Ainsi, l'invention permet de fournir au client 100 une réponse synchrone à la mise en oeuvre d'un processus applicatif globalement asynchrone, qui peut être long, et donc excéder le délai de « timeout ».

Par la suite, on présente notamment le cas d'une mise en oeuvre du procédé de l'invention par un moteur d'exécution BPEL. Il est clair cependant que l'invention ne se limite pas à cette application particulière, mais peut également être mise en oeuvre dans de nombreux autres domaines d'orchestration de processus et plus généralement dans tous les cas où ses avantages sont intéressants.

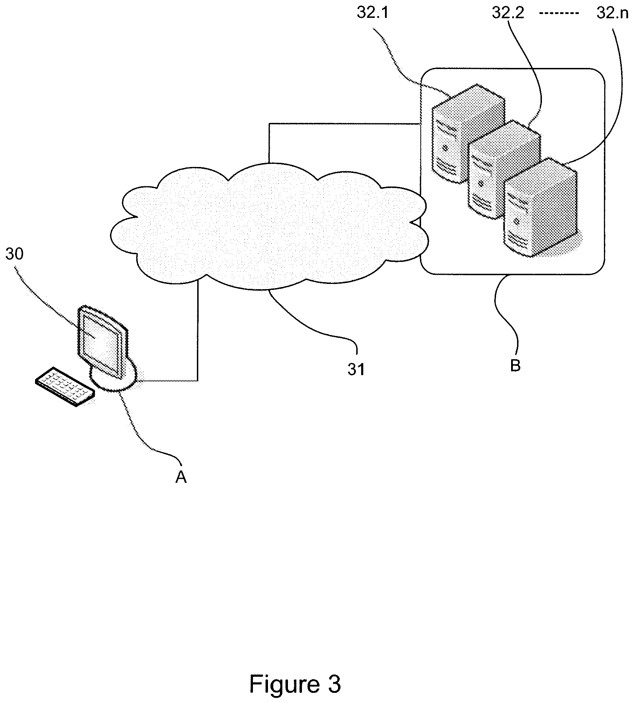

On présente, en relation avec la figure 3, une architecture informatique au sein de laquelle le procédé objet de l'invention peut être mis en oeuvre.

Un poste de travail « A » dispose d'un simple navigateur Internet (30) connecté à un réseau (31) (Internet, intranet, par exemple) mettant en oeuvre les protocoles usuels du Web (en particulier http). Un utilisateur de « A » visualise (par l'intermédiaire d'une application Web) un ensemble d'informations dans une matrice (une présentation d'informations et d'actions sous la forme d'un tableau) et peut lancer des actions (telles que des invocations de services) à travers des « assistants » (c'est-à-dire des programmes qui assistent les utilisateurs lors de la saisie d'informations).

Une plateforme « B » (composée d'un ou plusieurs serveurs) met à disposition de « A » cette application Web. Une partie des données manipulées par cette application est issue d'une base de données XML. Par ailleurs, la modification des données passe par le lancement de processus applicatifs orchestrant des appels à des briques de services accessibles sous la forme de Services Web.

Pour ce faire, la plateforme « B » dispose de serveurs Web et/ou de serveurs d'applications (32.1, 32.2, ... 32.n) assurant :
- la mise à disposition de l'application Web (utilisable en particulier par « A » au travers du navigateur Web 10) ;
- une mise en oeuvre du procédé de l'invention.

Les différentes composantes de la plateforme « B » peuvent être réparties sur plusieurs serveurs physiques différents.

Seule l'application Web est accessible par « A » à travers d'un serveur Web de « B ». Les autres composantes de « B » ne sont pas accessibles par « A ».

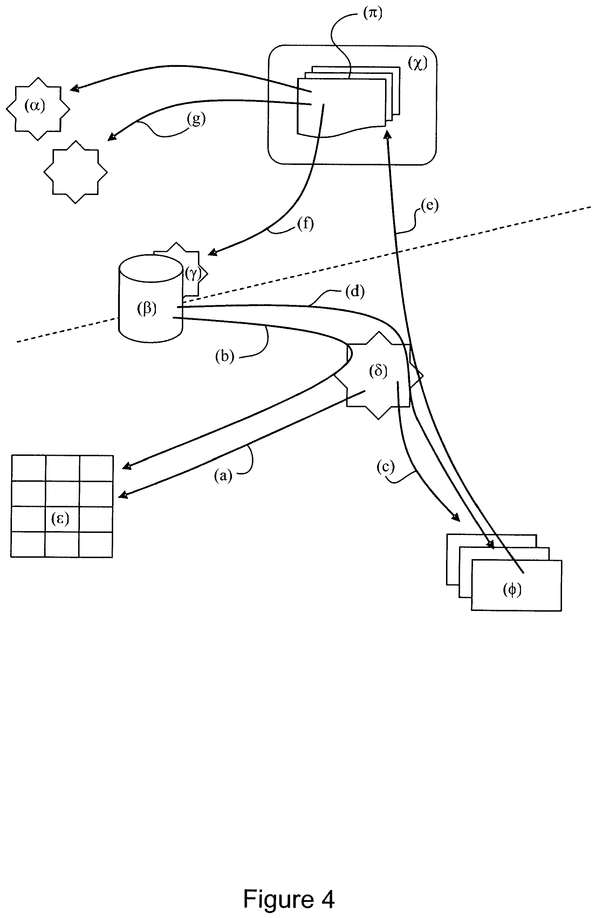

On présente, en relation avec la figure 4, les éléments constitutifs de la plateforme « B » de la figure 3 :
- une base de données XML (P) disposant d'un connecteur Service Web (c'est-à-dire acceptant des messages SOAP) synchrone autorisant certaines actions sur les données stockées dans la base (c'est à dire l'ajout, la modification, la suppression de certaines données ainsi que les contrôles associés avec des renvois d'erreurs le cas échéant) ;
- une application Web (δ) générant en particulier une matrice (ε) affichée dans le navigateur de « A » ainsi que des assistants(φ) permettant à l'utilisateur de « A » de lancer des processus applicatifs BPEL (χ). Cette application adapte l'affichage de la matrice en fonction de données présentes dans la base de données XML ;
- un moteur d'exécution de processus BPEL (χ) déroulant les processus applicatifs qui sont déployés, et appelant au cours de ces processus applicatifs des Services Web Applicatifs (α) ainsi que le Service Web Synchrone (γ) situé devant la base de données XML (β) ;

Il est bien entendu que les éléments constitutifs (α), (β), (δ) et (γ) peuvent être répartis sur plusieurs serveurs physiques différents.

On présente, toujours en relation avec les figures 3 et 4, le détail d'une mise en oeuvre du procédé de l'invention :
Lorsque l'utilisateur de « A » appelle l'application Web (δ), la matrice (ε) est affichée (a) dans son navigateur. Cette matrice regroupe un ensemble d'informations issues de la base de données XML (P) affichées (b) par l'application Web (δ).

Quand l'utilisateur de « A » souhaite déclencher un processus applicatif BPEL (π), par l'intermédiaire du moteur d'exécution de processus BPEL (χ), il sélectionne un élément adéquat présent au sien de la matrice qui déclenche (c) l'affichage d'un assistant (φ) adapté au processus à exécuter.

Cet assistant (φ) a globalement pour rôle de faire remplir par l'utilisateur de « A » les informations nécessaires au lancement du processus applicatifs. Pour faciliter la saisie (c'est-à-dire le pré-remplissage de certains champs), l'assistant peut interagir (d) avec des données issues de la base de données XML (β).

L'utilisateur de « A » remplit les informations requises dans l'assistant (φ) et valide ses choix.

L'action de validation appelle (e) le processus applicatif (π) correspondant. Le processus applicatif (π) étant un processus BPEL, l'appel (e) correspond à l'envoi d'un simple message SOAP.

Le processus applicatif (π) va dans la suite enchaîner, selon la logique métier concernée, des appels à différents Services Web (α) qui peuvent être nombreux et dont l'enchaînement peut donc durer un certain temps, potentiellement supérieur au « timeout » correspondant à l'appel du Service Web Processus (π) par l'assistant (φ).

Dans un fonctionnement classique de gestion de l'asynchronisme (implémentant par exemple « WS-Adressing »), il faudrait donc que l'assistant (φ) fasse un appel au Service Web processus en lui demandant de lui répondre à une URI déterminée avec un identifiant d'instance lorsque le processus applicatif (π) sera terminé, ce qui n'est pas envisageable ici, l'assistant (φ) n'étant en fait qu'un formulaire Web capable uniquement d'appeler un Service Web (et non une application complexe).

Ainsi l'assistant (φ) n'étant qu'un simple client de Service Web synchrone, le processus applicatif BPEL (π) doit donc se comporter de cette manière vis-à-vis de l'assistant (φ), c'est-à-dire qu'il doit se comporter de manière synchrone.

A cet effet, selon l'invention, le moteur d'orchestration (χ) du processus BPEL (π) commence par appeler (f) le Service Web Synchrone (γ) de la base de données XML (P) afin d'y insérer une information indiquant que l'action est lancée, puis répond immédiatement à l'assistant (φ) que l'action a été prise en compte, par exemple qu'une exécution est impossible du fait d'une exécution déjà en cours).

Si, au moment de l'insertion, le Service Web Synchrone (γ) de la base de données s'aperçoit qu'une information du même type a déjà été positionnée (par exemple par un autre utilisateur de l'application), le Service Web Synchrone (γ) retourne une erreur au processus applicatif BPEL (π) qui renvoie à son tour un message d'erreur à l'assistant (φ), et arrête là son déroulement. Une telle mise en oeuvre permet de bloquer les modifications concurrentes de données.

Vis-à-vis de l'assistant (φ), le Service Web du processus applicatif BPEL (π) se comporte donc bien comme un simple Service Web synchrone qui répond à une requête par une information du type "Action prise en compte / Problème rencontré". Le Service Web Synchrone (γ) en frontal de la base de données XML étant lui-même synchrone et rapide, cette mise ne oeuvre n'induit pas de retard notable.

L'assistant (φ) affiche alors le message à l'utilisateur de « A »; lorsque l'affichage de l'application (δ) dans le navigateur 30 est rafraîchi (manuellement ou automatiquement, à l'aide d'un script adéquat). Le contenu de la matrice est rechargé par l'application Web (δ) en utilisant la base de données XML (β) : ainsi un indicateur ad hoc est positionné dans la matrice (e.g. action en cours / erreur) avertissant l'utilisateur (cela est valable bien sûr pour tout utilisateur se connectant à l'application Web).

De son côté, le processus applicatif BPEL (π) continue de se dérouler de façon asynchrone par rapport à l'appel initial par l'assistant (φ) : il enchaîne les appels (g) aux Web services (α) -qui peuvent être synchrones ou asynchrones selon les besoins et les possibilités des briques concernées : peu importe la durée globale du processus.

Au terme de ces actions, le moteur d'orchestration BPEL (χ) appelle (f) le Service Web Synchrone (γ) de la base de données afin de lui transmettre les informations sur l'action réalisée et l'indicateur permettant de mentionner que l'action a été effectuée ou que, au contraire, une erreur est survenue: le processus est alors terminé (il ne répond donc cependant pas directement à l'appelant initial, à savoir l'assistant, comme dans un cas "normal" de processus applicatif BPEL asynchrone).

Il convient de noter que le processus peut distinguer plusieurs cas d'erreurs : les erreurs non bloquantes (c'est-à-dire les erreurs intervenues au cours du processus, mais que le processus est parvenu à corriger en réalisant une annulation des appels concernés) et des erreurs bloquantes (c'est-à-dire les erreurs pour lesquelles le processus n'a pas pu réaliser d'annulation correcte).

Ainsi, selon la nature de l'erreur, l'indicateur positionné dans la base de données n'est pas le même, ce qui permet ou bien de pouvoir relancer le processus (en cas d'erreur non bloquante), ou d'interdire toute relance avant une intervention manuelle (en cas d'erreur bloquante). En cas d'erreurs bloquantes, l'application Web (δ) (par l'intermédiaire de la matrice) interdit la relance des actions concernées (ainsi, l'utilisateur n'a pas à remplir l'assistant (φ) et à le valider avant d'avoir en retour le message "Action impossible").

Lorsqu'un utilisateur de «A» rafraîchit l'affichage de l'application dans son navigateur et que le déroulement du processus applicatif BPEL (π) globalement asynchrone est terminé, l'application Web (δ) (par l'intermédiaire de la matrice) affiche les informations sur l'action effectuée, informations issues de la base de données XML (β).

1.1 Exemple d'utilisation dans la cadre d'un système de « provisioning »

Un système d'approvisionnement (en anglais « provisioninig ») permet à un système d'information (qui contient par exemple des informations contractuelles liées à des clients d'un fournisseur de service) d'initialiser des clients auprès de plateformes de services.

Un tel système de « provisionning » doit, à partir de données fournies par un utilisateur, mettre en oeuvre de nombreux processus applicatifs pour permettre à un client de profiter des services auxquels il a souscrit.

Dans un exemple d'un tel système, toujours en relation avec la figure 4, la matrice (ε) regroupe sous forme de liste (lignes) des utilisateurs de services (service qui sont des colonnes de la matrice (ε)). La matrice est affichée dans le navigateur de l'utilisateur de la station de travail « A ».

Lorsque l'utilisateur de « A » souhaite déclencher un processus applicatif par exemple une « Assignation d'un service IP Centrex » (service permettant de mutualiser un PABX) à un client donné, il sélectionne l'élément correspondant dans la matrice. Cette sélection permet d'afficher un assistant (φ) dans lequel l'utilisateur saisira les informations nécessaires à l'assignation.

Une fois les informations saisies et la validation réalisée, le processus applicatif d'assignation est lancé. Le processus applicatif, après avoir demandé l'insertion (f) de l'information dans la base de données XML (P) répond à l'assistant (φ) qui affiche une information indiquant le lancement du processus.

La matrice (ε), une fois l'écran rafraîchi, matérialise par exemple sous la forme d'une icône « En cours d'affectation », l'asynchronisme de l'affectation (le rafraîchissement des informations consiste à aller relire les informations dans la base de données XML et de trouver, ce faisant, l'indicateur d'affectation en cours qui a été positionné à la demande du processus):
Pendant ce temps, l'exécution du processus applicatif d'affectation se poursuit avec l'appel des différentes briques de services applicatifs concernées.

Une fois que l'affectation est terminée et que le processus est allé positionner les informations sur la nouvelle affectation dans la base de données XML, la matrice (ε) affiche l'icône indiquant que le service « IP Centrex » a été affecté à cet utilisateur (après un rafraîchissement, c'est-à-dire une relecture des informations dans la base de données XML):

### 1.2 Autres caractéristiques optionnelles et avantages

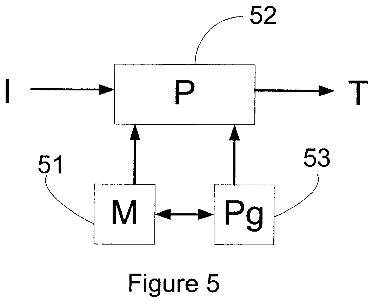

On présente, en relation avec la figure 5, un mode de réalisation d'un dispositif de contrôle de déroulement d'un processus applicatif selon l'invention.

Un tel moteur comprend une mémoire 51 constituée d'une mémoire tampon, une unité de traitement 52, équipée par exemple d'un microprocesseur µP, et pilotée par le programme d'ordinateur 53, mettant en oeuvre le procédé de contrôle selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I à transmettre (telle qu'une requête d'activation de processus applicatif). Le microprocesseur de l'unité de traitement 52 met en oeuvre les étapes du procédé décrit précédemment, selon les instructions du programme d'ordinateur 53, pour délivrer une information traitée T (telle qu'une information d'activation). Pour cela, le moteur comprend, outre la mémoire tampon 51, des moyens de recherche et de construction de requête d'interrogation synthétique, permettant notamment l'exécution du procédé de contrôle selon l'invention. Ces moyens sont pilotés par le microprocesseur de l'unité de traitement 52.

## Revendications

1. Procédé de contrôle d'au moins un processus applicatif comprenant une pluralité de services applicatifs, ledit procédé étant **caractérisé en ce qu'**il comprend :
- une étape de réception d'une requête d'activation dudit au moins un processus applicatif ;
- une première étape de transmission d'au moins une information représentative d'un début d'activation dudit processus applicatif, dite information d'activation ;
- des étapes d'exécution de chacun desdits services applicatifs ;
- des étapes de transmission d'une information représentative d'une fin d'exécution de chacun desdits services applicatifs ;
- une dernière étape de transmission d'au moins une information représentative d'une fin d'activation dudit processus applicatif, ladite étape tenant compte de chacune desdites informations représentatives d'une fin d'exécution de chacun desdits services applicatifs.

2. Procédé selon la revendication 1, **caractérisé en ce qu'**il comprend préalablement à ladite première étape de transmission, une étape d'exécution d'un service synchrone délivrant ladite au moins une information d'activation.

3. Procédé selon l'une quelconque des revendications 1 et 2, **caractérisé en ce que** ledit au moins un processus applicatif est du type BPEL.

4. Procédé Selon l'une quelconque des revendications 2 et 3, **caractérisé en ce qu'**à l'issue de ladite étape d'exécution d'un service synchrone, on exécute une étape d'insertion de ladite information d'activation dans une base de données si une telle information d'activation n'y a pas déjà été insérée relativement audit processus applicatif, de façon à fournir un indicateur selon lequel ledit processus applicatif est en cours d'exécution et ne peut être activé une nouvelle fois avant la fin de son exécution.

5. Dispositif de contrôle d'au moins un processus applicatif comprenant une pluralité de services applicatifs, ledit dispositif étant **caractérisé en ce qu'**il comprend :
- des moyens de réception d'une requête d'activation dudit au moins un processus applicatif ;
- des moyens de transmission d'au moins une information représentative d'un début d'activation dudit processus applicatif, dite information d'activation ;
- des moyens d'exécution de chacun desdits services applicatifs ;
- des moyens de transmission d'une information représentative d'une fin d'exécution de chacun desdits services applicatifs ;
- des moyens de transmission d'au moins une information représentative d'une fin d'activation dudit processus applicatif, ladite étape tenant compte desdites informations représentatives d'une fin d'exécution de chacun desdits services applicatifs.

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de contrôle selon l'une au moins des revendications 1 à 4, lorsqu'il est exécuté sur un ordinateur.

## Patentansprüche

1. Verfahren zum Steuern mindestens eines Anwendungsprozesses mit einer Vielzahl von Anwendungsdiensten, wobei das Verfahren **dadurch gekennzeichnet ist, dass** es umfasst:
- einen Schritt des Empfangens einer Aufforderung zur Aktivierung des mindestens einen Anwendungsprozesses;
- einen ersten Schritt des Übertragens mindestens einer Information, die für einen Aktivierungsbeginn des Anwendungsprozesses repräsentativ ist, Aktivierungsinformation genannt;
- Schritte des Ausführens jedes der Anwendungsdienste;
- Schritte des Übertragens einer Information, die für das Ausführungsende jedes der Anwendungsdienste repräsentativ ist;
- einen letzten Schritt des Übertragens mindestens einer Information, die für ein Aktivierungsende des Anwendungsprozesses repräsentativ ist, wobei der Schritt jede der Informationen berücksichtigt, die für ein Ausführungsende jedes der Anwendungsdienste repräsentativ sind.

2. Verfahren nach Anspruch 1, **dadurch gekennzeichnet, dass** es vor dem ersten Übertragungsschritt einen Schritt des Ausführens eines synchronen Dienstes umfasst, der die mindestens eine Aktivierungsinformation abgibt.

3. Verfahren nach einem der Ansprüche 1 und 2, **dadurch gekennzeichnet, dass** der mindestens eine Anwendungsprozess vom Typ BPEL ist.

4. Verfahren nach einem der Ansprüche 2 und 3, **dadurch gekennzeichnet, dass** nach dem Schritt des Ausführens eines synchronen Dienstes ein Schritt des Aufnehmens der Aktivierungsinformation in eine Datenbank ausgeführt wird, wenn eine solche Aktivierungsinformation nicht bereits bezüglich des Anwendungsprozesses aufgenommen wurde, so dass ein Indikator bereitgestellt wird, dem zufolge der Anwendungsprozess in Ausführung befindlich ist und vor dem Ende seiner Ausführung nicht nochmals aktiviert werden kann.

5. Vorrichtung zum Steuern mindestens eines Anwendungsprozesses mit einer Vielzahl von Anwendungsdiensten, wobei die Vorrichtung **dadurch gekennzeichnet ist, dass** sie umfasst:
- Mittel zum Empfangen einer Aufforderung zur Aktivierung des mindestens einen Anwendungsprozesses;
- Mittel zum Übertragen mindestens einer Information, die für einen Aktivierungsbeginn des Anwendungsprozesses repräsentativ ist, Aktivierungsinformation genannt;
- Mittel zum Ausführen jedes der Anwendungsdienste;
- Mittel zum Übertragen einer Information, die für ein Ausführungsende jedes der Anwendungsdienste repräsentativ ist;
- Mittel zum Übertragen mindestens einer Information, die für ein Aktivierungsende des Anwendungsprozesses repräsentativ ist, wobei der Schritt die Informationen berücksichtigt, die für ein Ausführungsende jedes der Anwendungsdienste repräsentativ sind.

6. Computerprogrammprodukt, das über ein Kommunikationsnetzwerk heruntergeladen werden kann und/oder auf einem computerlesbaren Medium gespeichert ist und/oder von einem Mikroprozessor ausführbar ist, **dadurch gekennzeichnet, dass** es Programmcodeanweisungen zum Ausführen des Steuerverfahrens nach mindestens einem der Ansprüche 1 bis 4 umfasst, wenn es auf einem Computer ausgeführt wird.

## Claims

1. Method for controlling at least one application process comprising a plurality of application services, said method being **characterized in that** it comprises:
- a step of receiving a request to activate said at least one application process;
- a first step of transmitting at least one item of information representative of a start of activation of said application process, termed item of activation information;
- steps of executing each of said application services;
- steps of transmitting an item of information representative of an end of execution of each of said application services;
- a last step of transmitting at least one item of information representative of an end of activation of said application process, said step taking account of each of said items of information representative of an end of execution of each of said application services.

2. Method according to Claim 1, **characterized in that** it comprises, prior to said first transmission step, a step of executing a synchronous service delivering said at least one item of activation information.

3. Method according to either one of Claims 1 and 2, **characterized in that** said at least one application process is of BPEL type.

4. Method according to either one of Claims 2 and 3, **characterized in that**, at the end of said step of executing a synchronous service, there is executed a step of inserting said item of activation information into a database if such an item of activation information has not already been inserted thereinto in relation to said application process, so as to provide an indicator according to which said application process is undergoing execution and is not able to be activated anew before the end of its execution.

5. Device for controlling at least one application process comprising a plurality of application services, said device being **characterized in that** it comprises:
- means for receiving a request to activate said at least one application process;
- means for transmitting at least one item of information representative of a start of activation of said application process, termed item of activation information;
- means for executing each of said application services;
- means for transmitting an item of information representative of an end of execution of each of said application services;
- means for transmitting at least one item of information representative of an end of activation of said application process, said step taking account of said items of information representative of an end of execution of each of said application services.

6. Computer program product downloadable from a communication network and/or stored on a computer-readable medium and/or able to be executed by a microprocessor, **characterized in that** it comprises program code instructions for the execution of the control method according to at least one of Claims 1 to 4 when it is executed on a computer.
